# EUROPEAN PATENT APPLICATION

(11) **EP 2 239 236 A1**
(43) Date of publication of application: **13.10.2010**
(21) Application number: 08757547.8
(22) Date of filing: 30.05.2008
(51) Int. Cl.: C02F 11/14, C02F 11/12

(54) **A SLUDGE CONCENTRATED DEHYDRATION METHOD**

(30) Priority: 02.01.2008 CN 200810025603
(71) Applicant: Guangzhou Pude Environmental Protection Equipment, Ltd., Guangdong 511450 (CN)
(72) Inventor: ZHONG, Huansheng, Guangdong 511450 (CN); LI, Lei, Guangdong 511450 (CN); WU, Jiacong, Guangdong 511450 (CN); WU, Xuewei, Guangdong 511450 (CN); SUN, Zhimin, Guangdong 511450 (CN); YANG, Haiying, Guangdong 511450 (CN)
(74) Representative: Hämmalov, Juhan
(86) International application number: PCT/CN2008/071136
(87) International publication number: WO 2009/082886

(57) **Abstract**

A sludge concentration and dehydration method is provided, which comprises the following steps: (1) add an organic agent (polyacrylamide) to the sludge for initial conditioning, then concentrate the sludge; (2) add an inorganic agent (a compound containing Fe and Ca) to the sludge for further conditioning, then transport the sludge to a dehydrator for dehydration; (3) dispose the dehydrated sludge correspondingly when it satisfies the requirements for final disposal.

## Description

### Technical Field

The present invention relates generally to a method of treating sludge, and more specifically relates to a sludge concentration and dehydration method that is capable of treating sludge with different water contents and reusing the treated sludge.

### Background Art

The existing treatment method for sludge with different water contents generally concentrates the sludge first, then adds a conditioning agent to the sludge and thereafter dehydrates the sludge. More particularly, the sludge is first transported to a gravity concentration tank to undergo concentration; the concentrated sludge is then mixed with a conditioning agent and thereafter transported to a dehydrator to undergo dehydration. When the dehydrated sludge satisfies the requirements for final disposal, the dehydrated sludge can be disposed correspondingly. If not, the dehydrated sludge can undergo further drying treatment so that the dried sludge satisfies the requirements for final disposal and is then disposed correspondingly. The organic conditioning agent can perform the functions of electrostatic charge neutralization and bridging absorption and thereby facilitate the agglomeration and flocculation of sludge to enhance sludge dehydration efficiency. In order to enhance sludge dehydration efficiency, polyacrylamide can be used for conditioning.

The said method of treating sludge has the following disadvantages: 1. High water content of the concentrated sludge, long time for concentration and large area occupied by the concentration tank: According to existing sludge concentration method, sludge with high water content is concentrated in a gravity concentration tank, and the water content of the concentrated sludge is usually 97%; the time required for concentration is long, and a large gravity concentration tank which takes up a lot of spaces is also required. 2. Difficult for final disposal: According to existing sludge dehydration method, the concentrated sludge is added with an organic conditioning agent for conditioning and then dehydrated mechanically in a sludge dehydrator, which is usually a centrifugal dehydrator, to obtain dehydrated sludge with a water content of around 80%. Some but very few sludge dehydrators are plate and frame filter press, but the water content of dehydrated sludge is only 70-75% even if dehydrators of this kind are used for dehydration. Therefore, the existing methods of dehydrating sludge fail to lower the water content of sludge to optimum level. Besides, sludge with a water content of 70-80% is difficult for final treatment and disposal; It is also difficult to be received by landfills because sludge of this kind is difficult to accumulate, easy to collapse and block a leachate collection system of a landfill site. 3. Large size, great mass and excessive amount of dehydrated sludge which results in extremely high costs for treatment and disposal: According to the said sludge treating method, concentration reduces the water content of the concentrated sludge to around 97%, centrifugal dehydration reduces the water content to around 80%, and dehydration by a plate and frame filter press can further reduce the water content to 70-75%. Since the existing sewage treatment plants mainly adopt centrifugal dehydration and only a few of them adopt dehydration by plate and frame filter presses, the dehydrated sludge from the existing sewage treatment plants still generally contains around 80% water. Due to the large amount and the high water content of the dehydrated sludge, the utility value resulting from further treatment and disposal of the dehydrated sludge is lower than the treatment costs, thereby resulting In severe limitation in the utilization of the sludge as a resource. Sludge with a high water content, for example, sludge with a water content of 80% which contains only 20% of dry sludge, is very difficult to treat and dispose because the water in the sludge, which In this case constitutes 80% of the sludge, increases the amount, the size and also the mass of sludge. In particular, in terms of utilization of the sludge as a resource, the high water content of the sludge results in a relatively low proportion of usable sludge; utilization of such sludge is difficult as the costs of dehydration is higher than the utilization value of the sludge. 4. Energy consumption for drying treatment is high: Sludge from sewage treatment plants with a water content of around 80% is directly dried to remove water from the sludge; however, the excessively high water content of the sludge results in a very great amount of water to be dried and evaporated and makes it difficult for water to evaporate, thus a large amount of heat energy has to be Consumed during the sludge drying process; as a result, energy consumption Is high, and consequently the costs of drying is very high; the heavily loaded drying equipment and the high treatment volume result in a very high and economically unaffordable investment and operation costs for the treatment and disposal of sludge. If the sludge is subject to further drying treatment to reduce the water content to 10%, the amount of sludge to be treated for sludge with a water content of 80% doubles the sludge with a water content of only 60%, and the amount of water needed to be dried and evaporated for 1 ton of sludge with a water content of 80% is 2.8 times the amount needed for 0.5 ton of sludge with a water content of 60%. 5. Loading and transporting sludge is inconvenient: For example, there are significant changes in the form, the nature, the size and the mass of the sludge which is dehydrated by a dehydrator to reduce the water content to only 60%. Sludge with a water content of 60% ls half the size and mass of sludge with a water content of 80%, Therefore, In comparison with sludge with a water content of 60%, sludge with a water content of 80% requires double the landfill space as well as double the transport load.

It is known from the above that one of the keys to restrict the treatment and disposal of sludge is the concentration and dehydration of sludge. Since the existing and commonly used method of treating sludge falls to perform better In separating water from the sludge, the efficiency of removing water from the sludge by concentration and dehydration is still relatively low.

Patent application number 200510200271.2 published on 9 November 2005 entitled "A sludge dehydration and stabilization processing method" discloses the following method: First, heat up and dry the sludge with a water content of 75-82% (solid content of 18% to 25%) which is dehydrated in a sewage treatment plant and control the solid content between 28-60% (water content of 40-72%; Second, mix evenly the heated and dried sludge with alkaline powdery material for stabilization. The amount of alkaline powdery material Is 5-30% of the sludge to be mixed with and Its pH value ls 11. Coal powder is also added to the sludge and the amount of which is 1-20% of the sludge to be mixed with. However, the embodiments disclosed in this patent document are not clear enough. Neither any embodiment nor any detailed proposal is disclosed and there is no information about Its implementation In actual practice. Moreover, there is no description on the nature, the shape, the quality and the water content of the sludge after it is mixed with the alkaline powdery material and the coal powder in this patent document. According to the method disclosed in this patent document, dehydrated sludge with 75-82% of water is heated and dried. However, heating and drying of sludge with a high water content requires much energy to be consumed because there is a great amount of water to be removed. Also, sludge with a high water content Is large in mass and size and thus requires a great amount of heat energy for heating and drying. Besides, the maximum amount of alkaline powdery material to be added is 30% of the sludge to be mixed with, and therefore the mass of the sludge would be increased by 30% at maximum. Since the coal powder should also be mixed with the sludge and the maximum amount of which ls 20% of the sludge to be mixed with, the maximum amount of the alkaline powdery material together with the coal powder could reach 50% of the amount of the sludge to be mixed with and so eventually resulting In a 50% increase in the mass of the sludge to be mixed with at maximum. As a result, the mass of the sludge does not decrease but increase by 10%. Since the amount of the sludge Is not reduced, both the mass and size of the sludge for final disposal are increased. As a result, the costs for treatment and disposal also Increase. Further, sludge of pH value higher than 11 will produce a lot of ammonia gas due to high pH value and thereby cause environmental pollution.

Patent application number 200610123552.7 published on 16 May 2007 entitled "A sludge deep dehydration method" discloses a method comprising the following steps: 1. Conditioning of sludge by first adding filtrate to the sludge, and then adding chemicals containing Fe to the sludge for 2-12 minutes of mixing and reacting, and thereafter adding chemicals containing Ca for another 3-15 minutes of mixing and reacting; 2. Dehydration of conditioned sludge in a plate and frame filter press where the pressure Is maintained at 1.5-2.5MPa for 30-70 minutes. The resulting dehydrated sludge may contain less than 60% of water. Since the sludge has to be added with filtrate, this method is disadvantageous in that it is applicable only to sludge dehydrated by the existing centrifugal dehydrators. Sludge dehydrated by a centrifugal dehydrator contains 80-85% of water. It Is then added with filtrate for dilution to increase the water content to around 90% and after that chemicals containing Fe and Ca are added for conditioning. Dehydrated sludge Is still added with water for dilution because the dehydrated sludge has to be further dehydrated in a plate and frame filter press so that the sludge dehydrated by a centrifugal dehydrator is further dehydrated to contain less than 60% of water.

### Disclosure of the Invention

In view of the aforesaid disadvantages now present in the prior art, the present invention provides a sludge concentration and dehydration method which is efficient in sludge concentration and dehydration, low in energy consumption, capable of significantly lowering the water content of the sludge, time saving In operation, low in investment and operation costs, simple and convenient to operate and suitable for sludge from water treatment, sludge sediments from lakes, ponds, rivers, streams, channels, ditches and drainage, and sludge produced by light industries, chemical industries and food processing industries.

The technical proposal of the present Invention is as follows: A sludge concentration and dehydration method which comprises the following steps: (1) The sludge is first subject to concentration to obtain concentrated sludge; (2) The concentrated sludge is mixed with a conditioning agent and then transported to a dehydrator for dehydration to obtain dehydrated sludge; (3) Dispose the dehydrated sludge correspondingly when it satisfies requirements for final disposal. The key is that the sludge of the said step (1) is added with an organic conditioning agent for initial conditioning before it is subject to concentration, and the concentrated sludge of the said step (2) Is added with an inorganic conditioning agent for further conditioning before It is transported to the dehydrator. Since the sludge is dehydrated after the initial conditioning and the further conditioning, water content of the sludge is significantly lowered.

In order that the sludge being conditioned in the initial conditioning is concentrated to have an even lower water content so that the time for concentration may be significantly shortened, and in order that the sludge with a relatively lower water content may be obtained after the further conditioning and dehydration, the organic conditioning agent used in the initial conditioning is polyacrylamide (PAM) organic compound which is able to perform the functions of electrostatic charge neutralization and bridging absorption, thereby altering the nature of the sludge, enhancing quick sedimentation of the sludge to attain high sludge density after sedimentation, and achieving quick concentration and lower water content in the sludge.

In order to achieve favourable dehydration effect of the sludge conditioned In the further conditioning and a further lowered water content of the dehydrated sludge, the Inorganic conditioning agent is a compound containing Fe and Ca. The functions of the compound include electrostatic charge neutralization, enmeshing, aiding coagulation, absorbing, passivating heavy metals, disinfecting, deodorizing and forming skeleton. The compound can also alter the nature of the sludge, favour easier separation of water from the sludge under mechanical action so that water content of the sludge is significantly lowered within a short period of time. The compound also ensures that the sludge dehydrated after the further conditioning will be granulated in good form when it undergoes drying treatment and thereby satisfies requirements for sludge granulation during the sludge drying treatment.

In order that the sludge contains even lesser amount of water after the initial conditioning, the polyacrylamide (PAM) organic compound added to the sludge is in amount of 0.05-0.5% of the mass of dry sludge, so that the concentrated sludge has a water content of 86-95%.

In order that the water content can be further lowered after the sludge is dehydrated In a plate and frame filter press, the chemical compound containing Fe and Ca added to the sludge contains 0.3-6% of Fe and 3-150% of Ca relative to the mass of dry sludge. The chemical compound containing the above proportionate amount of Fe and Ca is added to the concentrated sludge for further conditioning and the conditioned sludge is then transported to a plate and frame filter press dehydrator for dehydration to obtain dehydrated sludge with a water content of 51-69%.

In order to achieve better concentration effect of the sludge after the initial conditioning, the sludge after the initial conditioning can be concentrated by way of gravity concentration or mechanical concentration. The said mechanical concentration can be centrifugal concentration.

In order that the dehydrated sludge can satisfy the requirements of different applications for final disposal, the dehydrated sludge, as mentioned in said step 3, can be dried until the requirements for final disposal are satisfied and the sludge is thereafter disposed correspondingly.

In order to define the applications for final disposal, the final disposal is exemplified by disposal for landfills, incineration, composting, making of bricks, making of organic nutritive soil and making of clean coal.

In order to further lower the water content of the conditioned sludge, the dehydrator Is a plate and frame filter press.

In order that the present invention is applicable to sludge from different sources, the sludge prior to concentration, as mentioned in said step 1, can be sludge from water treatment, or sludge sediments from lakes, ponds, rivers, streams, channels, ditches or drainage, or sludge produced by light industries, chemical industries and food processing industries.

The present invention has the following advantages: Sludge concentrated by the method according to the present invention can reduce the water content of the sludge to 86-95%. In comparison with the existing and commonly used sludge concentration method which reduces the water content of the sludge to only 97%, the present invention reduces the size of the sludge by 40-78.6%, and therefore reduces the water content of the sludge to be treated in subsequent procedures and the load for treatment. Meanwhile, the reduction of water content reduces the size and mass of the sludge and therefore reduces the amount of the sludge to be treated in subsequent procedures. Besides, removal of water from the sludge by way of concentration consumes the least amount of energy, as compared with other techniques for the same purpose. The greater the amount of water removed from the sludge during concentration, the lesser the work and the lighter the load for treatment of sludge in subsequent procedures. Most importantly, the overall energy consumption of treating sludge can be significantly lowered so that the costs of treating the sludge can also be significantly lowered. Since the amount of the sludge to be dehydrated in subsequent procedures is reduced and the time for concentration is shortened, the space required for and the area occupied by the concentration tank are significantly reduced. Furthermore, concentration can be succeeded by dehydration without interruption.

Water content of the sludge dehydrated by the method of the present invention can be lowered to 51-69%. In comparison with existing and commonly used method which lowers the water content of sludge to 80% by centrifugal dehydration, the present invention reduces the amount of the sludge by 35.5-59.2%, therefore significantly reducing the amount of the sludge to be dried in subsequent procedures. The size and mass of the sludge with 80% water are two times the size and mass of the sludge with 60% water. Since the method of drying usually removes water from sludge by heating the sludge, drying of the sludge consumes much energy. Reduction of water content of the dehydrated sludge not only reduces the amount of the sludge to be dried but also significantly reduces the amount of water to be evaporated, thereby saving a great amount of energy for drying the sludge and thus reducing the energy consumption for the whole process of sludge treatment. In comparison with the method commonly used locally and internationally in which the dehydrated sludge with a water content of 80% (1 ton as an example) is dried to a water content of 10%, the present invention which dehydrates the same amount of sludge to a water content of 60% (0.5 ton In this example) and then dries the sludge to a water content of 10% reduces the drying amount by half, reduces the amount of water needed to be evaporated from 778kg to 278kg and thereby reduces energy consumption by 64.3%. In particular, the sludge with a water content of less than 60% satisfies the requirements for direct disposal to landfills without any need for prior treatment and that solves the existing problem of the difficulty to directly dispose the sludge with a water content of 80% to landfills and the difficulty of further treating this kind of sludge. Moreover, sludge with a water content of 51-69% is very convenient to transport, as compared with sludge with a water content of 80%.

### Brief Description of Drawings

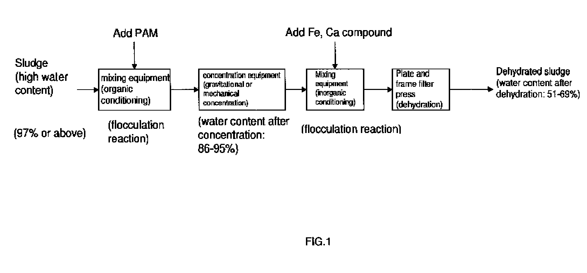

FIG. 1 Is the flow chart of the method of the present invention.

### Best Mode for Carrying out the Invention

As shown In FIG. 1, the present invention comprises the following steps: (1) The sludge is first subject to concentration to obtain concentrated sludge; (2) The concentrated sludge is mixed with a conditioning agent and then transported to a dehydrator for dehydration to obtain dehydrated sludge; (3) Dispose the dehydrated sludge correspondingly when it satisfies requirements for final disposal. The sludge of the said step (1) is added with an organic conditioning agent for initial conditioning before it is subject to concentration. The concentrated sludge of the said step (2) is added with an inorganic conditioning agent for further conditioning before it is transported to the dehydrator. Since the sludge is dehydrated after the initial conditioning and the further conditioning, water content of the sludge Is significantly lowered. In order that the sludge being conditioned in the first conditioning is concentrated to have an even lower water content so that the time for concentration may be significantly shortened, and In order that the sludge with a relatively lower water content may be obtained after the further conditioning and dehydration, the organic conditioning agent used in the initial conditioning is polyacrylamide (PAM) organic compound which is able to perform the functions of electrostatic charge neutralization and bridging absorption, thereby altering the nature of the sludge, enhancing quick sedimentation of the sludge to attain high sludge density after sedimentation, and achieving quick concentration and lower water content in the sludge. In order to achieve favourable dehydration effect of the sludge conditioned in the further conditioning and a very low water content of the dehydrated sludge, the Inorganic conditioning agent is a chemical containing Fe and Ca. The functions of the compound include electrostatic charge neutralization, enmeshing, aiding coagulation, absorbing, passivating heavy metals, disinfecting, deodorizing and forming skeleton. The compound can also alter the nature of the sludge, favour easier separation of water from the sludge under mechanical action so that water content of the sludge is significantly lowered within a short period of time, and favour the passivating of heavy metals in the sludge. Therefore, the inorganic conditioning agent ensures that the sludge dehydrated after the further conditioning will be granulated in good form when it undergoes drying treatment and thereby satisfies requirements for sludge granulation during the sludge drying treatment. In order that the sludge contains even lesser amount of water after the initial conditioning, the polyacrylamide (PAM) organic compound added to the sludge is in amount of 0.05-0.5% of the mass of dry sludge, so that the concentrated sludge has a water content of 86-95%. In order that the water content can be further lowered after the sludge is dehydrated in a plate and frame filter press, the chemical compound containing Fe and Ca added to the sludge contains 0.3-6% of Fe and 3-150% of Ca relative to the mass of dry sludge. The chemical compound containing the above proportionate amount of Fe and Ca is added to the concentrated sludge for further conditioning and the conditioned sludge is then transported to a plate and frame filter press dehydrator to obtain dehydrated sludge with a water content of 51-69%. In order to achieve better concentration effect of the sludge after the initial conditioning, the sludge after the initial conditioning can be concentrated by way of gravity concentration, centrifugal concentration, or even vacuum concentration. The dehydrated sludge can be finally disposed for different applications. The dehydrated sludge, as mentioned In said step 3, can be dried until the requirements for final disposal are satisfied and the sludge is thereafter disposed correspondingly. In order to define the applications for final disposal, the final disposal Is exemplified by disposal for landfills, incineration, composting, making of bricks, making of organic nutritive soil and making of clean coal. In order to further lower the water content of the conditioned sludge, the dehydrator is a plate and frame filter press. The present Invention is applicable to sludge from different sources. The sludge prior to concentration, as mentioned in said step 1, may be sludge from water treatment, or sludge sediments from lakes, ponds, rivers, streams, channels, ditches or drainage, or sludge produced by light Industries, chemical industries and food processing industries.

### Embodiment 1

Transport the remaining sludge with a water content of 99.5% from a secondary sedimentation tank of an urban sewage treatment plant to a mixing tank, add to the sludge with an amount of polyacrylamide (PAM) equivalent to 0.12% of the mass of dry sludge, mix and blend the sludge with polyacrylamide (PAM) for full flocculation reaction to achieve the initial conditioning of the sludge, transport the conditioned sludge to a sludge concentration tank for sedimentation under gravitational force to undergo quick concentration, leave the sludge for 60 minutes for concentration, drain away the supernatant fluid formed by the water separated from the sludge out of the sludge concentration tank, pump the concentrated sludge from the bottom of the concentration tank and transport the concentrated sludge to the next procedure. Concentrated sludge at this stage contains 93% of water.

Next, the concentrated sludge is transported to a mixing tank for the further conditioning; add 1.9% of Fe first and then 7% of Ca to the concentrated sludge and the percentages of Fe and Ca to be added are relative to the amount of dry sludge during the further conditioning, mix and blend the sludge for 10 minutes for full mixing and full flocculation reaction of the added conditioning agent and the sludge to achieve further inorganic conditioning, transport the conditioned sludge to a plate and frame filter press with an injection pressure of 1.2 MPa and maintaining pressure of 25 MPa, complete the dehydration process in 2 hours. Open the plate and frame filter press and discharge the dehydrated sludge cake. The sludge now contains 58% of water.

### Embodiment 2

Transport the remaining sludge with a water content of 99.7% from a secondary sedimentation tank of an urban sewage treatment plant to a mixing tank, add to the sludge with an amount of polyacrylamide (PAM) equivalent to 0.15% of the mass of dry sludge, mix and blend the sludge with polyacrylamide (PAM) for full flocculation reaction to achieve the Initial conditioning of the sludge, transport the conditioned sludge to a sludge concentration tank for sedimentation under gravitational force to undergo quick concentration, leave the sludge for 120 minutes for concentration, drain away the supernatant fluid formed by the water separated from the sludge out of the sludge concentration tank, pump the concentrated sludge from the bottom of the concentration tank and transport the concentrated sludge to the next procedure. Concentrated sludge at this stage contains 90% of water.

Next, the concentrated sludge is transported to a mixing tank for the further conditioning; add 2.28% of Fe first and then 8.4% of Ca to the concentrated sludge and the percentages of Fe and Ca to be added are relative to the amount of dry sludge during the further conditioning, mlx and blend the sludge for 10 minutes for full mixing and full flocculation reaction of the added conditioning agent and the sludge to achieve further Inorganic conditioning, transport the conditioned sludge to a plate and frame filter press with an Injection pressure of 1.2 MPa and maintaining pressure of 25 MPa, complete the dehydration process In 2.5 hours. Open the plate and frame filter press and discharge the dehydrated sludge cake. The sludge now contains 55% of water.

### Embodiment 3

Transport the remaining sludge with a water content of 99.3% from a secondary sedimentation tank of an urban sewage treatment plant to a mixing tank, add to the sludge with an amount of polyacrylamide (PAM) equivalent to 0.16% of the mass of dry sludge, mlx and blend the sludge with polyacrylamide (PAM) for full flocculation reaction to achieve the initial conditioning of the sludge, transport the conditioned sludge to a sludge concentration tank for sedimentation under gravitational force to undergo quick concentration, leave the sludge for 120 minutes for concentration, drain away the supernatant fluid formed by the water separated from the sludge out of the sludge concentration tank, pump the concentrated sludge from the bottom of the concentration tank and transport the concentrated sludge to the next procedure. Concentrated sludge at this stage contains 90.7% of water.

Next, the concentrated sludge is transported to a mixing tank for the further conditioning; add 2.09% of Fe first and then 9.8% of Ca to the concentrated sludge and the percentages of Fe and Ca to be added are relative to the amount of dry sludge during the further conditioning, mix and blend the sludge for 10 minutes for full mixing and full flocculation reaction of the added conditioning agent and the sludge to achieve further inorganic conditioning, transport the conditioned sludge to a plate and frame filter press with an injection pressure of 1.2 MPa and maintaining pressure of 25 MPa, complete the dehydration process in 3 hours. Open the plate and frame filter press and discharge the dehydrated sludge cake, The sludge now contains 51 % of water.

### Embodiment 4

Transport the remaining sludge with a water content of 99.5% from a secondary sedimentation tank of an urban sewage treatment plant to a mixing tank, add to the sludge with an amount of polyacrylamide (PAM) equivalent to 0.09% of the mass of dry sludge, mix and blend the sludge with polyacrylamide (PAM) for full flocculation reaction to achieve the initial conditioning of the sludge, transport the conditioned sludge to a sludge concentration tank for sedimentation under gravitational force to undergo quick concentration, leave the sludge for 60 minutes for concentration, drain away the supernatant fluid formed by the water separated from the sludge out of the sludge concentration tank, pump the concentrated sludge from the bottom of the concentration tank and transport the concentrated sludge to the next procedure. Concentrated sludge at this stage contains 95.3% of water.

Next, the concentrated sludge Is transported to a mixing tank for the further conditioning; add 1.71 % of Fe first and then 7% of Ca to the concentrated sludge and the percentages of Fe and Ca to be added are relative to the amount of dry sludge during the further conditioning, mix and blend the sludge for 10 minutes for full mixing and full flocculation reaction of the added conditioning agent and the sludge to achieve further inorganic conditioning, transport the conditioned sludge to a plate and frame filter press with an injection pressure of 1.2 MPa and maintaining pressure of 25 MPa, complete the dehydration process In 2 hours. Open the plate and frame filter press and discharge the dehydrated sludge cake. The sludge now contains 62% of water.

### Embodiment 5

Transport the remaining sludge with a water content of 99.5% from a secondary sedimentation tank of an urban sewage treatment plant to a mixing tank, add to the sludge with an amount of polyacrylamide (PAM) equivalent to 0.07% of the mass of dry sludge, mix and blend the sludge with polyacrylamide (PAM) for full flocculation reaction to achieve the initial conditioning of the sludge, transport the conditioned sludge to a sludge concentration tank for sedimentation under gravitational force to undergo quick concentration, leave the sludge for 60 minutes for concentration, drain away the supernatant fluid formed by the water separated from the sludge out of the sludge concentration tank, pump the concentrated sludge from the bottom of the concentration tank and transport the concentrated sludge to the next procedure. Concentrated sludge at this stage contains 96.1 % of water.

Next, the concentrated sludge is transported to a mixing tank for the further conditioning; add 1.75% of Fe first and then 5.6% of Ca to the concentrated sludge and the percentages of Fe and Ca to be added are relative to the amount of dry sludge during the further conditioning, mix and blend the sludge for 10 minutes for full mixing and full flocculation reaction of the added conditioning agent and the sludge to achieve further inorganic conditioning, transport the conditioned sludge to a plate and frame filter press with an injection pressure of 1.2 MPa and maintaining pressure of 25 MPa, complete the dehydration process in 2 hours. Open the plate and frame filter press and discharge the dehydrated sludge cake. The sludge now contains 64% of water.

## Claims

1. A sludge concentration and dehydration method which comprises the following steps:
(1) The sludge is first subject to concentration to obtain concentrated sludge;
(2) The concentrated sludge is mixed with a conditioning agent and then transported to a dehydrator for dehydration to obtain dehydrated sludge; and
(3) Dispose the dehydrated sludge correspondingly when it satisfies requirements for final disposal;
**characterized in that** the sludge of the said step (1) is added with an organic conditioning agent for initial conditioning before it is subject to concentration, and the concentrated sludge of the said step (2) is added with an inorganic conditioning agent for further conditioning before it is transported to the dehydrator.

2. The sludge concentration and dehydration method as in Claim 1, **characterized in that** the organic conditioning agent used in the initial conditioning is polyacrylamide (PAM) organic compound which is able to perform functions of electrostatic charge neutralization and bridging absorption, thereby altering nature of the sludge, enhancing quick sedimentation of the sludge to attain high sludge density after sedimentation, and achieving quick concentration and significantly lower water content in the sludge.

3. The sludge concentration and dehydration method as in Claim 1, **characterized in that** the Inorganic conditioning agent is a compound containing Fe and Ca; the functions of the compound include electrostatic charge neutralization, enmeshing, alding coagulation, absorbing, passivating heavy metals, disinfecting, deodorizing and forming skeleton; the compound can also alter nature of the sludge, favour easier separation of water from the sludge under mechanical action so that water content of the sludge is significantly lowered within a short period of time; the compound also ensures that the sludge dehydrated after the further conditioning will be granulated in good form when it undergoes drying treatment and thereby satisfies requirements for sludge granulation during the sludge drying treatment.

4. The sludge concentration and dehydration method as in Claim 2, **characterized in that** the polyacrylamide (PAM) organic compound added to the sludge is In amount of 0.05-0.5% of the mass of dry sludge, so that the concentrated sludge has a water content of 86-95%.

5. The sludge concentration and dehydration method as in Claim 3, **characterized in that** the compound containing Fe and Ca added to the sludge contains 0.3-6% of Fe and 3-150% of Ca relative to the mass of dry sludge; the compound containing the above proportionate amount of Fe and Ca is added to the concentrated sludge for further conditioning and the conditioned sludge is then transported to a plate and frame filter press dehydrator for dehydration to obtain dehydrated sludge with a water content of 51-69%.

6. The sludge concentration and dehydration method as in Claim 1 or Claim 2, **characterized in that** the sludge after the initial conditioning can be concentrated by way of gravity concentration or mechanical concentration.

7. The sludge concentration and dehydration method as in Claim 1 or Claim 3, **characterized In that** the dehydrated sludge, as mentioned in said step 3, can be dried until the requirements for final disposal are satisfied and the sludge is thereafter disposed correspondingly.

8. The sludge concentration and dehydration method as in Claim 1, **characterized in that** the final disposal can be disposal for landfills, incineration, composting, making of bricks, making of organic nutritive soil and making of clean coal.

9. The sludge concentration and dehydration method as in Claim 1, **characterized in that** the dehydrator is a plate and frame filter press.

10. The sludge concentration and dehydration method as in Claim 1, **characterized in that** the sludge prior to concentration, as mentioned In said step 1, can be sludge from water treatment, or sludge sediments from lakes, ponds, rivers, streams, channels, ditches or drainage, or sludge produced by light industries, chemical industries and food processing industries.
